# EUROPEAN PATENT SPECIFICATION

(11) **EP 3 254 945 B1**
(45) Date of publication and mention of the grant of the patent: **24.07.2019**
(21) Application number: 17159316.3
(22) Date of filing: 06.03.2017
(51) Int. Cl.: B62M 6/55, F16D 41/30, B62M 23/00, B62K 25/28, B62K 25/30, B62M 11/02, F16D 41/12, F16D 41/06

(54) **DRIVE UNIT AND ELECTRIC-MOTOR-ASSISTED BICYCLE**
ANTRIEBSEINHEIT UND ELEKTROMOTORUNTERSTÜTZTES FAHRRAD
UNITÉ D'ENTRAÎNEMENT ET BICYCLETTE ASSISTÉE PAR MOTEUR ÉLECTRIQUE

(30) Priority: 10.06.2016 JP 2016115869
(43) Date of publication of application: 13.12.2017
(73) Proprietor: Yamaha Hatsudoki Kabushiki Kaisha, Iwata-shi, Shizuoka 438-8501 (JP)
(72) Inventor: USAMI, Tomohiro, Iwata-shi, Shizuoka 438-8501 (JP)
(74) Representative: Grünecker Patent- und Rechtsanwälte PartG mbB

(56) References cited:
- EP-A1- 0 636 536
- EP-A2- 0 847 915
- US-A- 3 720 294
- US-A- 5 915 493

## Description

The present invention relates to a drive unit configured to be attached to a vehicle-body frame included in an electric-motor-assisted bicycle and an electric-motor-assisted bicycle, and more particularly to a drive unit having a one-way clutch positioned to be coaxial with the crank axle and an electric-motor-assisted bicycle including such a drive unit.

Bicycles are used by many people, regardless of age and gender, as a handy transportation means. In recent years, electric-motor-assisted bicycles have become popular that add driving forces from the motor to pedaling forces from the rider to assist the rider. Such an electric-motor-assisted bicycle is disclosed in EP 0636536 A1 and JP Hei 08 (1996)-53094 A, for example.

The above publication describes an electric-motor-assisted bicycle that includes a drive unit. The drive unit includes a crank axle. Pedals are mounted on the crank axle by means of arms. The drive unit is attached to the vehicle-body frame.

According to the above-listed publication, the drive unit further includes a one-way clutch positioned to be coaxial with the crank axle. The one-way clutch includes an inner ring, an outer ring, a plurality of lugs, and a spring. The inner ring is fixed to the crank axle. The outer ring has a void in which the inner ring is housed. A plurality of engagement teeth are provided on the inner periphery of the outer ring so as to be arranged along the entire circumference. The lugs are located between the inner and outer rings. The spring exerts a biasing force on the lugs. This causes each lug to engage one of the engagement teeth.

The drive unit is a component that was not present in conventional bicycles. Consequently, bicycles where importance is given to travelling performance, such as racing bicycles, may be affected by the presence of the drive unit. More specifically, including a one-way clutch may lead to a time lag between a moment at which the rider steps on the pedal and a moment at which the resulting drive power is transmitted to the rear wheel.

To reduce such a time lag, the number of engagement teeth may be increased, for example. However, increasing the number of engagement teeth may lead to increased size (radial dimension) of the one-way clutch.

Further, the one-way clutch is located on the path along which tread forces input by the rider are transmitted to the rear wheel. Thus, stability of operation is required.

An object of the present invention is to a drive unit configured to be attached to a vehicle-body frame included in an electric-motor-assisted bicycle and an electric-motor-assisted bicycle capable to reduce such a time lag and, at the same time, avoid an increase in the size of the one-way clutch and stabilize the operation of the one-way clutch.

According to the present invention said object is solved by a drive unit configured to be attached to a vehicle-body frame included in an electric-motor-assisted bicycle according to the independent claim 1 and an electric-motor-assisted bicycle with such drive unit. Preferred embodiments are laid down in the dependent claims.

A drive unit according to an embodiment is attached to a vehicle-body frame included in an electric-motor-assisted bicycle. The drive unit includes a housing, a crank axle, and a one-way clutch. The crank axle extends through the housing. The one-way clutch is positioned to be coaxial with the crank axle. The one-way clutch includes an outer member and an inner member. The outer member includes an inner peripheral portion. The inner peripheral portion includes an inner peripheral surface of the outer member. The inner member is inserted through the outer member. The inner member includes an outer peripheral portion. The outer peripheral portion includes an outer peripheral surface of the inner member. The outer peripheral portion faces the inner peripheral portion of the outer member such that the outer peripheral portion and the inner peripheral portion are arranged in a radial direction of the crank axle. One of the outer member and the inner member rotates together with the crank axle. A plurality of clutch teeth is provided on one of the inner peripheral portion of the outer member and the outer peripheral portion of the inner member. The clutch teeth are spaced apart from each other by an equal distance as measured in a circumferential direction of the crank axle. The one-way clutch further includes a plurality of clutch lugs and a plurality of springs. The clutch lugs are provided on the other of the inner peripheral portion of the outer member and the outer peripheral portion of the inner member. The clutch lugs are spaced apart from each other by an equal distance as measured in the circumferential direction. The springs are provided on the other of the inner peripheral portion of the outer member and the outer peripheral portion of the inner member and spaced apart from each other by an equal distance as measured in the circumferential direction. The number of the clutch lugs is an even number not smaller than 4 (four). The number of the clutch teeth is an even number that is not a multiple of the number of the clutch lugs. The number of the springs is half the number of the clutch lugs. Each of the plurality of springs is capable of exerting a biasing force on two of the plurality of clutch lugs that are adjacent as determined along the circumferential direction for holding them at a position for engagement with two of the plurality of clutch teeth. The one-way clutch further includes a plurality of pins. The plurality of pins are provided on the other of the inner peripheral portion of the outer member and the outer peripheral portion of the inner member. Each of the plurality of pins is in contact with one of the plurality of springs to restrict movement of this spring. When one of the two clutch lugs on which the spring restricted from moving exerts the biasing force is pushed in from the position for engagement by a back of one of the plurality of clutch teeth, the biasing force exerted on the other one of the two clutch lugs increases.

The above-described drive unit reduces a time lag and, at the same time, avoids an increase in the size of the one-way clutch and stabilizes the operation of the one-way clutch.

Starting from the above-described drive unit, an implementation of the clutch teeth provided on the inner peripheral portion of the outer member may be, for example, that where the clutch teeth are provided on the inner peripheral surface of the outer member.

Starting from the above-described drive unit, an implementation of the clutch teeth provided on the outer peripheral portion of the inner member may be, for example, that where the clutch teeth are provided on the outer peripheral surface of the inner member.

Starting from the above-described drive unit, an implementation of the clutch lugs provided on the inner peripheral portion of the outer member may be, for example, that where at least a portion of each of the clutch lugs is in contact with the inner peripheral surface of the outer member, or that where at least a portion of each of the clutch lugs is located radially outward of the inner peripheral surface of the outer member. An implementation of at least a portion of each of the clutch lugs located radially outward of the inner peripheral surface of the outer member may be, for example, that where at least a portion of each of the clutch lugs is located within a recess formed in the inner peripheral surface of the outer member.

Starting from the above-described drive unit, an implementation of the clutch lugs provided on the outer peripheral portion of the inner member may be, for example, that where at least a portion of each of the clutch lugs is in contact with the outer peripheral surface of the inner member, or that where at least a portion of each of the clutch lugs is located radially inward of the outer peripheral surface of the inner member. An implementation of at least a portion of each of the clutch lugs located radially inward of the outer peripheral surface of the inner member may be, for example, that where at least a portion of each of the clutch lugs is located within a recess formed in the outer peripheral surface of the inner member.

Starting from the above-described drive unit, an implementation of the springs provided on the inner peripheral portion of the outer member may be, for example, that where at least a portion of each of the springs is located radially outward of the inner peripheral surface of the outer member. An implementation of at least a portion of each of the springs located radially outward of the inner peripheral surface of the outer member may be, for example, that where at least a portion of each of the springs is located within a recess formed in the inner peripheral surface of the outer member, or that where at least a portion of each of the springs is located within a tunnel-shaped space formed in the outer member. The recess within which the spring is located may be, for example, a slit being open on the inner peripheral surface of the outer member and extending in the circumferential direction.

Starting from the above-described drive unit, an implementation of the springs provided on the outer peripheral portion of the inner member may be, for example, that where at least a portion of each of the springs is located radially inward of the outer peripheral surface of the inner member. An implementation of at least a portion of each of the springs located radially inward of the outer peripheral surface of the inner member may be, for example, that where at least a portion of each of the springs is located within a recess formed in the outer peripheral surface of the inner member, or that where at least a portion of each of the springs is located within a tunnel-shaped space formed in the inner member. The recess within which the spring is located may be, for example, a slit being open on the outer peripheral surface of the inner member and extending in the circumferential direction.

### BRIEF DESCRIPTION OF THE DRAWINGS

FIG. 1 is a right-side view of an electric-motor-assisted bicycle in an embodiment.
FIG. 2 is a cross-sectional view of the internal construction of a drive unit included in the electric-motor-assisted bicycle shown in FIG. 1.
FIG. 3 is an enlarged cross-sectional view of a portion of FIG. 2.
FIG. 4 is an enlarged cross-sectional view of another portion of FIG. 2.
FIG. 5 is a cross-sectional view taken along line V-V of FIG. 4 and showing the internal construction of the one-way clutch.
FIG. 6 is an enlarged view of a portion of FIG. 5.
FIG. 7 is a perspective view of the one-way clutch, with the driving member removed.
FIG. 8 is a perspective view of a clutch lug.
FIG. 9 is an enlarged view of another portion of FIG. 5.
FIG. 10 shows the internal construction of the one-way clutch, where each of the four clutch lugs is not in engagement with a clutch tooth.

### DESCRIPTION OF THE EMBODIMENTS

The present embodiment come up with a construction of a drive unit having a one-way clutch positioned to be coaxial with the crank axle that reduces the time lag between a moment at which the rider steps on the pedal and a moment at which the resulting drive power is transmitted to the rear wheel, and reached the following findings.

First, the present embodiment take care of the reason of a time lag, and refers to a conclusion that the time required for a clutch lug to come into engagement with a clutch tooth causes a time lag.

Next, the present embodiment considers increasing the number of clutch teeth to reduce the time lag. Increasing the number of clutch teeth reduces the time required for a clutch lug to come into engagement with a clutch tooth, i.e. the time lag.

To increase the number of clutch teeth, the size of the clutch teeth may be reduced, for example. However, reducing the size of the clutch teeth makes it difficult for a clutch tooth to get caught on a clutch lug.

To increase the number of clutch teeth without changing the size of the clutch teeth, the radial dimension of the one-way clutch may be increased, for example. However, increasing the radial dimension of the one-way clutch makes it difficult to provide a space within the housing of the drive unit in which other components may be positioned.

In view of this, the present embodiment come up with a construction that avoids an increase in the radial dimension of the one-way clutch and still reduces the time lag.

First, the present embodiment considers what construction a one-way clutch positioned to be coaxial with the crank axle should have to stabilize the transmission of torque, and found out that the transmission of torque is stabilized if two opposite clutch lugs are provided to be arranged in a radial direction of the crank axle and each of these clutch lugs engages a clutch tooth.

Providing two clutch lugs means that these clutch lugs are always used when transmitting torque. In such implementations, the load on each clutch lug is larger than that in implementations where four clutch lugs engage clutch teeth simultaneously. Accordingly, something must be done to improve the durability of the clutch lugs.

In view of this, the present embodiment considers to improve the durability of the clutch lugs. The present embodiment is focused on arrangements where the number of clutch lugs is an even number not smaller than 4 (four) and two of the clutch lugs engage clutch teeth at a given moment, and found out that the number of clutch teeth is suitably an even number that is not a multiple of the number of clutch lugs.

Unfortunately, simply making the number of clutch teeth and the number of clutch lugs have this relationship makes it difficult to stabilize the operation of the one-way clutch. This will be further explained below.

If the number of clutch teeth and the number of clutch lugs have the above-discussed relationship, two opposite clutch lugs arranged in a radial direction engage clutch teeth, while the other clutch lugs are pushed in by the backs of clutch teeth. That is, the operation of the former is quite opposite to that of the latter. Then, if only one spring is provided to exert a biasing force on the four clutch lugs, as described in JP Hei 08 (1996)-53094 A, the operation of one of two clutch lugs that are adjacent as determined in the circumferential direction of the crank axle may affect the operation of the other one. This will be further explained below.

As one clutch lug is pushed in by the back of a clutch tooth, the spring is deformed. At this moment, the biasing force exerted by the spring on the other clutch lug decreases. Accordingly, the other clutch lug may move away from the position at which it could engage a clutch tooth.

When the other clutch lug moves away from the position at which it could engage a clutch tooth, the other clutch lug may not properly engage a clutch tooth. As a result, the operation of the one-way clutch is unstable.

The present embodiment is focused on the spring for exerting a biasing force on the clutch lugs to stabilize the operation of the one-way clutch.

An embodiment will be described below with reference to the drawings. The same or corresponding parts are labeled with the same characters in the drawings and their description will not be repeated.

### [Electric-Motor-Assisted Bicycle]

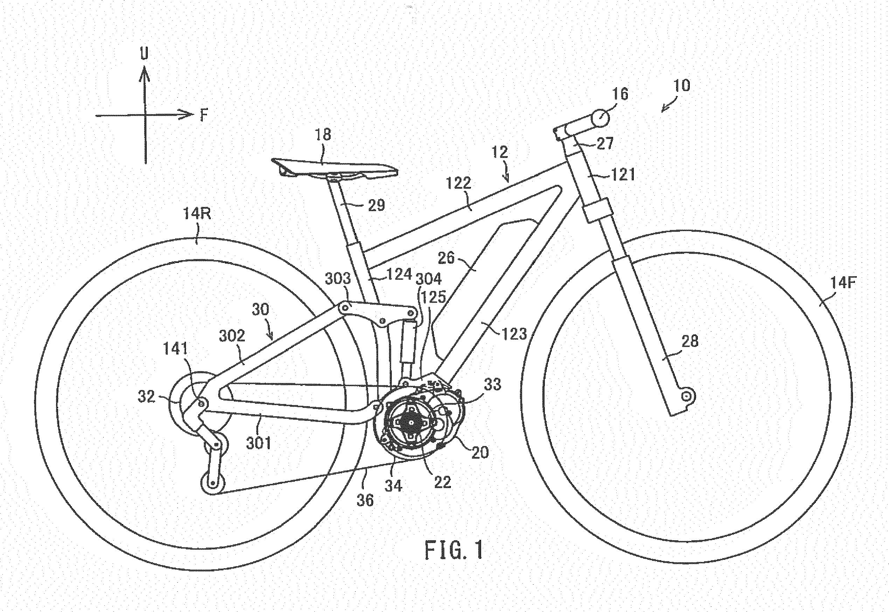

Referring to FIG. 1, an electric-motor-assisted bicycle 10 in an embodiment will be described. FIG. 1 is a schematic right-side view of the electric-motor-assisted bicycle 10.

In the following description, the directions "front/forward", "rear(ward)", "left", "right", "top/upward" and "bottom/downward" mean directions as perceived by a rider sitting on the saddle 18 of the electric-motor-assisted bicycle 10. In the drawings referred to in the following description, arrow "F" indicates the forward direction with respect to the vehicle; arrow "U" indicates the upward direction with respect to the vehicle; arrow "L" indicates the left direction with respect to the vehicle; and arrow "R" indicates the right direction with respect to the vehicle.

The electric-motor-assisted bicycle 10 includes a vehicle-body frame 12, a front wheel 14F, a rear wheel 14R, handlebars 16, a saddle 18, a drive unit 20, and a battery unit 26.

The vehicle-body frame 12 includes a head tube 121, a top tube 122, a down tube 123, a seat tube 124 and a bracket 125.

The head tube 121 is located at the front of the vehicle-body frame 12 and extends in a top/bottom direction. A stem 27 is inserted into the head tube 121 such that the stem is rotatable. Handlebars 16 are fixed to the top end of the stem 27. A front fork 28 is fixed to the bottom end of the stem 27. The front wheel 14F is rotatably attached to the bottom end of the front fork 28. That is, the front wheel 14F is supported by the vehicle-body frame 12 with the stem 27 and front fork 28 provided in between.

The top tube 122 is located rearward of the head tube 121 and extends in the front/rear direction. The front end of the top tube 122 is connected to the head tube 121. The rear end of the top tube 122 is connected to the seat tube 124.

The down tube 123 is located rearward of the head tube 121 and extends in the front/rear direction. The down tube 123 is located below the top tube 122. The front end of the down tube 123 is connected to the head tube 121. In the present embodiment, the front end of the down tube 123 is also connected to the front end of the top tube 122. The rear end of the down tube 123 is connected to the bracket 125.

The battery unit 26 is attached to the down tube 123. The battery unit 26 supplies the drive unit 20 with electric power. The battery unit 26 includes a battery and a controller. The battery is a chargeable/dischargeable battery. The controller controls the battery to be charged or discharged, and monitors battery output current, remaining battery level, and other parameters.

The seat tube 124 is located rearward of the top tube 122 and down tube 123 and extends in the top/bottom direction. The bottom end of the seat tube 124 is connected to the bracket 125. In other words, the seat tube 124 extends upwardly from the bracket 125.

The seat tube 124 is bent at the center as measured in the top/bottom direction. As such, the lower portion of the seat tube 124 extends in the top/bottom direction while the upper portion of the seat tube 124 extends in a direction angled relative to the top/bottom direction.

The seatpost 29 is inserted into the seat tube 124. The saddle 18 is attached to the top end of the seatpost 29.

The bracket 125 is located at the bottom of the vehicle-body frame 12. The bracket 125 supports the drive unit 20. The drive unit 20 generates driving forces to be transmitted to the rear wheel 14R which is located rearward of the front wheel 14F. The drive unit 20 will be described in detail further below.

The vehicle-body frame 12 further includes a swingarm 30, a pair of connecting arms 303 and a suspension 304. The swingarm 30 includes a pair of chain stays 301 and a pair of seat stays 302.

The chain stays 301 extend in the front/rear direction. The chain stays 301 are arranged in the left/right direction. The rear wheel 14R is located between the chain stays 301. The chain stays 301 are positioned to be mirror images of each other. In view of this, only the right chain stay 301 is shown in FIG. 1.

The front end of each of the chain stays 301 is attached to the bracket 125. That is, the chain stays 301 extend rearwardly from the bracket 125. The chain stays 301 are positioned such that they are capable of swinging relative to the bracket 125 about an axis that extends in the left/right direction.

The axle 141 of the rear wheel 14R is attached to the rear ends of the chain stays 301 such that the axle cannot rotate. That is, the rear wheel 14R is supported on the chain stays 301 such that the rear wheel is capable of rotating about the axle 141. In short, the rear wheel 14R is supported by the vehicle-body frame 12. A multi-stage driven sprocket 32 is fixed to the rear wheel 14R.

The seat stays 302 extend in the front/rear direction. The seat stays 302 are arranged in the left/right direction. The rear wheel 14R is located between the seat stays 302. The seat stays 302 are positioned to be mirror images of each other. In view of this, only the right seat stay 302 is shown in FIG. 1.

The rear end of the left seat stay 302 is connected to the rear end of the left chain stay 301. The rear end of the right seat stay 302 is connected to the rear end of the right chain stay 301.

The connecting arms 303 extend in the front/rear direction. The connecting arms 303 are arranged in the left/right direction. The seat tube 124 is located between the connecting arms 303. The connecting arms 303 are positioned to be mirror images of each other. In view of this, only the right connecting arm 303 is shown in FIG. 1.

The connecting arms 303 are attached to the seat tube 124. The connecting arms 303 are positioned to be capable of swinging relative to the seat tube 124 about an axis that extends in the left/right direction.

As viewed from a side of the vehicle, the front ends of the connecting arms 303 are located forward of the seat tube 124. As viewed from a side of the vehicle, the rear ends of the connecting arms 303 are located rearward of the seat tube 124.

The rear end of the left connecting arm 303 is attached to the front end of the left seat stay 302. The left connecting arm 303 is positioned to be capable of swinging relative to the left seat stay 302 about an axis that extends in the left/right direction.

The rear end of the right connecting arm 303 is attached to the front end of the right seat stay 302. The right connecting arm 303 is positioned to be capable of swinging relative to the right seat stay 302 about an axis that extends in the left/right direction.

The suspension 304 is located forward of the seat tube 124 and rearward of the down tube 123. The top end of the suspension 304 is attached to the connecting arms 303. The suspension 304 is positioned to be capable of swinging relative to the connecting arms 303 about an axis that extends in the left/right direction. The bottom end of the suspension 304 is attached to the bracket 125. The suspension 304 is positioned to be capable of swinging relative to the bracket 125 about an axis that extends in the left/right direction. The suspension 304 is attached to the bracket 125 at a position that is forward of the position at which the seat tube 124 is attached to the bracket 125.

A driving sprocket 34 is attached to the drive unit 20 with a support member 33 provided in between. A chain 36 is wound about the driving sprocket 34 and driven sprocket 32.

Although not shown, a crankarm is attached to each of the ends of the crank axle 22, as measured in the axial direction, included in the drive unit 20. A pedal is attached to each of the crankarms.

### [Drive Unit]

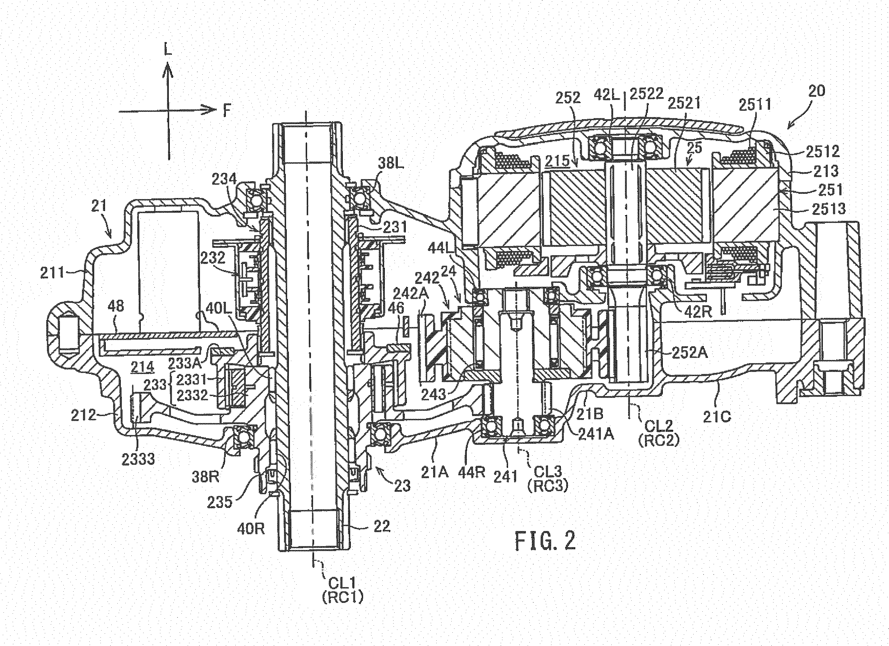

The drive unit 20 will be described with reference to FIG. 2. FIG. 2 is a cross-sectional view of the internal construction of the drive unit 20.

The drive unit 20 includes a housing 21, a crank axle 22, a rotating shaft 23, a reduction gear 24 and a motor 25. These components will be described below.

The housing 21 is fixed to the bracket 125 by means of a plurality of fasters. The housing 21 includes a housing member 211, a housing member 212 and a cover 213. The housing members 211 and 212 and cover 213 are made of a metal material. The metal material may be an aluminum alloy, for example.

The housing member 211 is laid over the housing member 212 from the left as measured in the left/right direction. Then, the housing member 211 is fixed to the housing member 212 by means of a plurality of fasteners. As a result, a space 214 is defined by the housing members 211 and 212.

The cover 213 is laid over the housing member 211 from the left as measured in the left/right direction. Then, the cover 213 is fixed to the housing member 211 by means of a plurality of fasteners. As a result, a space 215 is defined by the cover 213 outside the housing member 211 (i.e. to the left thereof).

The crank axle 22 extends through the housing 21 in the left/right direction. That is, the central axis CL1 of the crank axle 22 extends in the left/right direction. The central axis CL1 provides the rotational center RC1 of the crank axle 22 as viewed in an axial direction of the crank axle 22.

A bore extends through the crank axle 22 in the axial direction of the crank axle 22. That is, the crank axle 22 has the shape of a cylinder.

The crank axle 22 is supported on the housing 21 such that the crank axle is capable of rotating relative to the housing about the central axis CL1 of the crank axle 22. A bearing 38L that rotatably supports the crank axle 22 is fixed to the housing member 211. A bearing 38R, which rotatably supports the crank axle 22 with the driven member 2332 of the one-way clutch 233 described further below and the slide bearings 40L and 40R provided in between, is fixed to the housing member 212.

The crank axle 22 extends through the rotating shaft 23. The rotating shaft 23 is housed in the housing 21. The rotating shaft 23 will be described in detail further below.

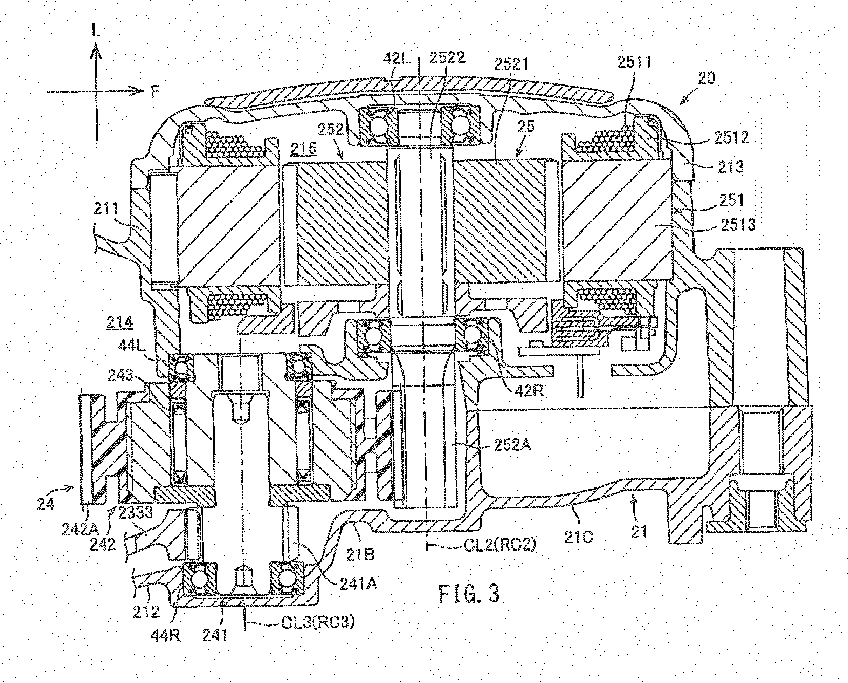

The motor 25 and reduction gear 24 will be described with reference to FIG. 3. FIG. 3 is an enlarged cross-sectional view of a portion of FIG. 2.

The motor 25 is housed in the housing 21. The motor 25 generates driving forces for assisting the rider in propelling the electric-motor-assisted bicycle 10. The motor 25 includes a stator 251 and a rotor 252.

The stator 251 includes a plurality of bobbins 2512 (14 bobbins in the present embodiment) around which coils 2511 are wound. An iron core 2513 is inserted into the bobbins 2512. The stator 251 is located within the space 215. The stator 251 is fixed to the housing member 211.

The rotor 252 is located inside the stator 251. The central axis CL2 of the rotor 252 is parallel to the central axis CL1 of the crank axle 22. That is, the rotor 252 is positioned parallel to the crank axle 22. The central axis CL2 provides the rotational center RC2 of the rotor 252 as viewed in an axial direction of the crank axle 22.

The rotor 252 includes a rotor body 2521 and an output shaft 2522. These components will be described below.

The outer periphery of the rotor body 2521 is magnetized to form N- and S-poles arranged alternately in the circumferential direction. In the present embodiment, seven N-poles and seven S-poles are provided.

The output shaft 2522 extends through the rotor body 2521. The output shaft 2522 is fixed to the rotor body 2521. That is, the output shaft 2522 rotates together with the rotor body 2521.

The output shaft 2522 is supported by two bearings 42L and 42R such that the output shaft is capable of rotating relative to the housing 21 about the central axis CL2. The bearing 42L is fixed to the cover 213. The bearing 42R is fixed to the housing member 211 to be located to the right of the rotor body 2521 (i.e. further in a second axial direction).

The output shaft 2522 extends through the housing member 211. An output gear 252A is provided on the portions of the output shaft 2522 that are located within the space 214.

The reduction gear 24 is housed in the housing 21. More specifically, the reduction gear 24 is located within the space 214. The reduction gear 24 is located to overlap portions of the motor 25 as viewed in an axial direction of the crank axle 22.

The central axis CL3 of the reduction gear 24 (i.e. central axis CL3 of the rotational shaft 241) is parallel to the central axis CL1 of the crank axle 22. That is, the reduction gear 24 is positioned parallel to the crank axle 22. The central axis CL3 provides the rotational center RC3 of the reduction gear 24 as viewed in an axial direction of the crank axle 22. The rotational center RC3 overlaps the stator 251 as viewed in an axial direction of the crank axle 22.

The reduction gear 24 includes a rotatable shaft 241 and a cylindrical portion 242. These components will be described below.

The cylindrical portion 242 has the shape of a cylinder. The cylindrical portion 242 includes a gear 242A that can engage the output gear 252A. The gear 242A has a larger diameter than the output gear 252A and includes more teeth than the output gear 252A. That is, the rotational speed of the gear 242A is lower than the output gear 252A.

The output shaft 241 is inserted into the cylindrical portion 242. The rotatable shaft 241 is positioned coaxially with the cylindrical portion 242. The rotatable shaft 241 is formed by press-fitting a small-diameter shaft portion having a gear 241A into a large-diameter shaft portion. The gear 241A is at a different location than the gear 242A as measured in the axial direction of the rotatable shaft 241. The gear 241A is located closer to the housing member 212 than the gear 242A is as measured in the left/right direction.

A one-way clutch 243 is positioned between the rotatable shaft 241 and cylindrical portion 242. Thus, when the rotor 252 rotates in the positive direction, the rotatable shaft 241 rotates together with the cylindrical portion 242, That is, driving forces from the motor 25 are transmitted to the gear 2333 via the reduction gear 24. Further, when the motor 24 is stationary and the gear 2333 rotates in the forward direction (i.e. in a direction associated with the advancement of the vehicle), the rotatable shaft 241 rotates relative to the cylindrical portion 242. That is, rotation of the gear 2333 is not transmitted to the rotor 252.

The rotatable shaft 241 is supported by the two bearings 44L and 44R such that the rotatable shaft is capable of rotating relative to the housing 21 about the central axis CL3. The bearing 44L is lightly press-fitted into the housing member 211. The bearing 44R is fixed to the housing member 212.

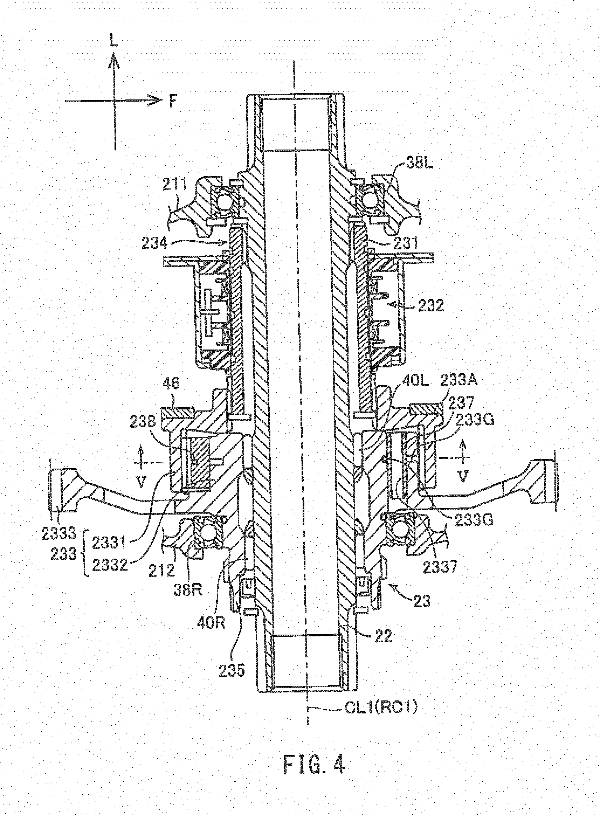

The rotatable shaft 23 will be described with reference to FIG. 4. FIG. 4 is an enlarged cross-sectional view of another portion of FIG. 2.

The rotatable shaft 23 is positioned coaxially with the crank axle 22 and is capable of rotating together with the crank axle 22. The rotatable shaft 23 includes a coupling shaft 231 and a one-way clutch 233.

The coupling shaft 231 has the shape of a cylinder. The crank axle 22 is inserted into the coupling shaft 231. The coupling shaft 231 is positioned coaxially with the crank axle 22.

The left end of the coupling shaft 231 (i.e. furthermost position thereon in a first axial direction) is coupled with the crank axle 22 by spline coupling or the like. As such, the coupling shaft 231 rotates together with the crank axle 22 regardless of whether the crank axle 22 rotates in the forward or rearward direction.

A torque detection device 232 is provided around the coupling shaft 231. The torque detection device 232 is supported on the housing member 211.

The torque detection device 232 detects torque generated in the coupling shaft 231 when the rider pedals. The torque detection device 232 is a known magnetostrictive torque sensor. The torque detection device 232 provides a signal associated with the detected torque to a controller mounted on a substrate 48. The controller refers to the signal associated with the torque detected by the torque detection device 232 to recognize the state of the bicycle in terms of the pedaling by the rider, and controls the motor 25.

The one-way clutch 233 is located closer to the housing member 212 than the torque detection device 232 is as measured in the axial direction of the crank axle 22. The one-way clutch 233 is positioned coaxially with the crank axle 22.

The one-way clutch 233 includes a driving member 2331 which constitutes the outer member and a driven member 2332 which constitutes the inner member. These component will be described below.

The driving member 2331 has the shape of a cylinder. The right end of the coupling shaft 231 (i.e. furthermost position thereon in the second axial direction) is inserted into the left end of the driving member 2331 (i.e. furthermost position thereon in the first axial direction). The driving member 2331 is positioned coaxially with the coupling shaft 231. The right end of the coupling shaft 231 (i.e. furthermost position thereon in the second axial direction) is coupled with the left end of the driving member 2331 (i.e. furthermost position thereon in the first axial direction) by spline coupling or the like. As a result, the driving member 2331 rotates together with the coupling shaft 231 regardless of whether the coupling shaft 231 rotates in the forward or rearward direction. That is, the driving member 2331 rotates together with the crank axle 22 regardless of whether the crank axle 22 rotates in the forward or rearward direction. The coupling shaft 231 and driving member 2331 function as a crank-rotation input shaft 234 that rotates in an integral manner with the crank axle 22.

An annular attachment surface 233A is provided as part of the outer periphery of the driving member 2331. The attachment surface 233A expands radially with respect to the driving member 2331 and extends in the circumferential direction. A ring magnet 46 is fixed to the attachment surface 233A. That is, the ring magnet 46 rotates together with the driving member 2331. Thus, detection element mounted on the substrate 48 provided within the housing 21 may be used to detect changes in magnetic field caused by rotation of the ring magnet 46, thereby detecting rotation of the driving member 2331 (i.e. crank axle 22).

The driven member 2332 has the shape of a cylinder. The crank axle 22 is inserted into the driven member 2332. Slide bearings 40L and 40R are provided between the driven member 2332 and crank axle 22. Thus, the driven member 2322 is positioned to be coaxial with the crank axle 22 and capable of rotating relative to it.

The driven member 2332 is inserted into the right end of the driving member 2331 (i.e. furthermost position thereon in the second axial direction). A ratchet mechanism working as a one-way clutch mechanism is provided between the driven member 2332 and the right end of the driving member 2331 (i.e. furthermost position thereon in the second axial direction). Thus, rotational forces in the forward direction from the driving member 2331 are transmitted to the driven member 2332, while rotational forces in the rearward direction from the driving member 2331 are not transmitted to the driven member 2332.

The driven member 2332 is supported by the bearing 38R fixed to the housing member 212 such that the driven member is capable of rotating relative to the housing 21 about the central axis CL1 of the crank axle 22.

The driven member 2332 extends through the housing member 212. The driving sprocket 34 (see FIG. 1) is attached, by means of the support member 33 (see FIG. 1), to the portions of the driven member 2332 that are located outward (i.e. to the right) of the housing 21.

The driven member 2332 includes a gear 2333. The gear 2333 engages the gear 241 of the reduction gear 24. The gear 2333 has a larger diameter than the gear 241A and has more teeth than the gear 241A. That is, the rotational speed of the gear 2333 is lower than the rotational speed of the gear 241A.

The driven member 2332 implements a resultant-force output shaft 235 that provides the resultant of a human-generated force provided through the one-way clutch 233 (i.e. pedaling force) and a motor-generated driving force provided through the gear 2333. That is, the resultant-force output shaft 235 is included in the rotatable shaft 23.

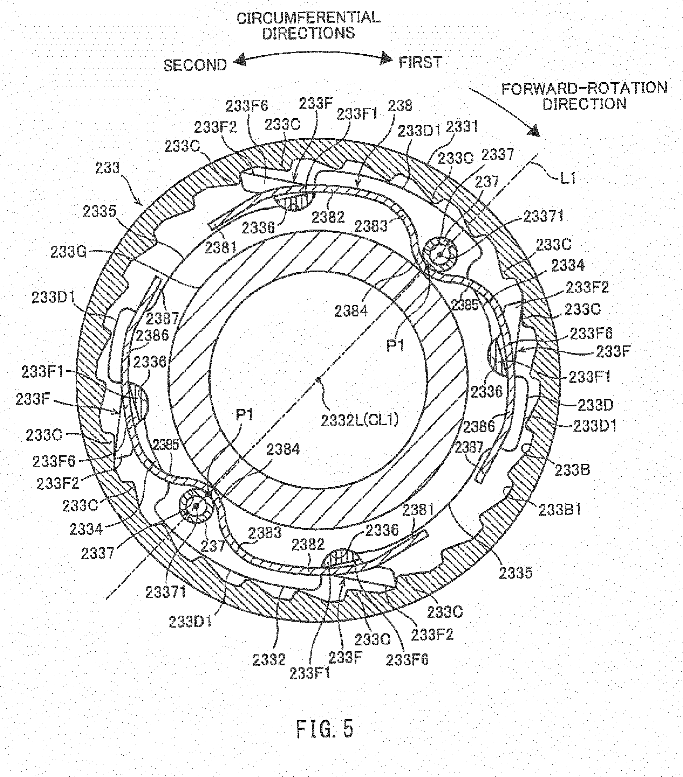

Next, the one-way clutch 233 will be described with reference to FIG. 5. FIG. 5 shows the internal construction of the one-way clutch 233. FIG. 5 shows that two of the four clutch lugs 233F engage clutch teeth 233C.

The driving member 2331 has an inner peripheral portion 233B. The inner peripheral portion 233B has an inner peripheral surface 233B1. The inner peripheral surface 233B1 is cylindrical in shape. The inner peripheral surface 233B1 has a plurality of clutch teeth 233C formed therein. The clutch teeth 233C are spaced apart from each other by an equal distance as measured in the circumferential direction. The clutch teeth 233C protrude from the inner peripheral surface 233B1. The number of the clutch teeth 233C is 26.

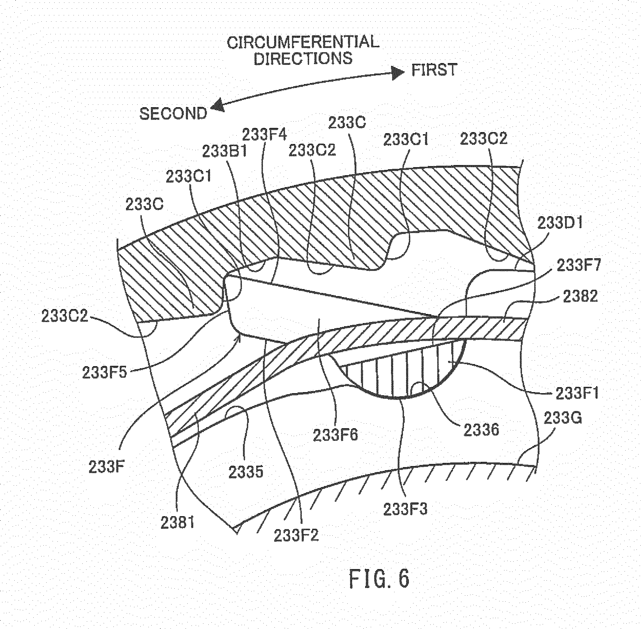

The clutch teeth 233C will be described in detail with reference to FIG. 6. FIG. 6 is an enlarged view of a portion of FIG. 5.

Each of the clutch teeth 233C has a contact surface 233C1 and a contact surface 233C2. As viewed in an axial direction of the driving member 2331, the contact surface 233C1 is located toward a first circumferential direction with respect to the driving member 2331 relative to the contact surface 233C2. The contact surface 233C1 is located forward of the contact surface 233C2 as determined along the direction in which the crank axle 22 rotates forward (right-handed direction in FIG. 5, i.e. first direction).

As viewed in an axial direction of the driving member 2331, the contact surfaces 233C1 and 233C2 extend so as to protrude from the inner peripheral surface 233B1. That is, the contact surfaces 233C1 and 233C2 extend in directions crossing the circumferential direction of the driving member 2331. As viewed in an axial direction of the driving member 2331, the contact surface 233C1 extends in a direction crossing the contact surface 233C2. In the implementation shown in FIG. 6, the contact surface 233C1 extends in a direction that is generally perpendicular to the contact surface 233C2. As viewed in an axial direction of the driving member 2331, the amount of extension of the contact surface 233C1 from the inner peripheral surface 233B1 is smaller than the amount of extension of the contact surface 233C2 from the inner peripheral surface 233B1. The angle of inclination of the contact surface 233C1 relative to the inner peripheral surface 233B1 is larger than the angle of inclination of the contact surface 233C2 relative to the inner peripheral surface 233B1 to allow the contact surface 233C1 to engage a clutch lug 233F.

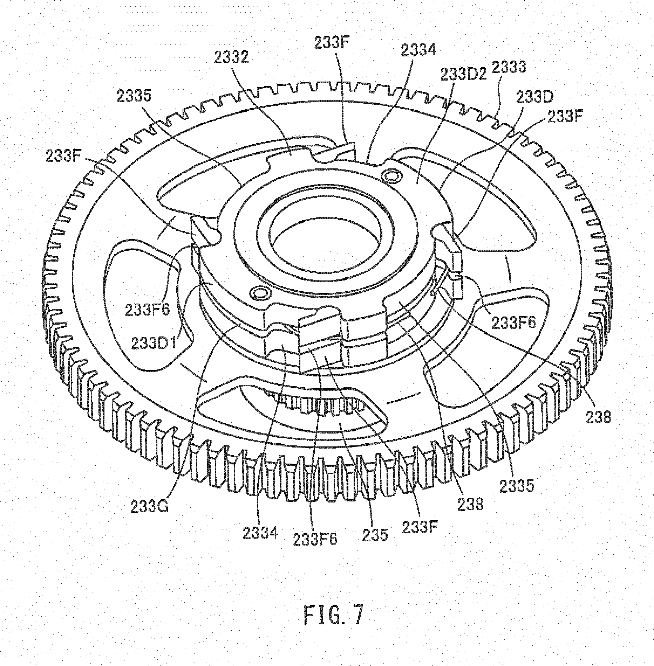

The one-way clutch 233 will be described in further detail with reference to FIGS. 5 and 7. FIG. 7 is a perspective view of the one-way clutch 233, with the driving member 2331 removed.

The driven member 2332 includes two receptacles 2334 and two receptacles 2335. The receptacles 2334 and 2335 are provided on the portions of the driven member 2332 that are located inward of the driving member 2331, i.e. the outer peripheral portion 233D of the portion inserted into the driving member 2331. The receptacles 2334 and 2335 are open on the outer peripheral surface 233D1 of the outer peripheral portion 233D and the left end surface 233D2 of the outer peripheral portion 233D (i.e. furthermost plane thereof as determined along a first axial direction).

One of the two receptacles 2334 is located on the side of the central axis 2332L of the driven member 2332 (i.e. central axis CL1 of the crank axle 22) that is opposite to the side having the other receptacle 2334 such that the two receptacles are arranged in a radial direction of the driven member 2332. One of the two receptacles 2335 is located on the side of the central axis 2332L of the driven member 2332 that is opposite to the side having the other receptacle 2335 such that the two receptacles are arranged in a radial direction of the driven member 2332. The receptacles 2334 and 2335 are alternately arranged as determined along the circumferential direction of the driven member 2332. The dimension of each receptacle 2334 as measured in the circumferential direction of the driven member 2332 is smaller than the dimension of each receptacle 2335 as measured in the circumferential direction of the driven member 2332.

Each of the receptacles 2334 and 2335 has a recess 2336 located at one end as determined along the circumferential direction of the driven member 2332. Each recess 2336 is open on the inner surface of its respective receptacle 2334 or 2335.

A clutch lug 233F is received in each of the receptacles 2334 and 2335. That is, four clutch lugs 233F are located on the outer peripheral portion 233D of the driven member 2332. The one-way clutch 233 includes four clutch lugs 233F.

One of the clutch lugs 233F in the two receptacles 2335 is located on the side of the central axis 2332L of the driven member 2332 that is opposite to the side having the other clutch lug 233F such that they are arranged in a radial direction of the driven member 2332. One of the clutch lugs 233F in the two receptacles 2334 is located on the side of the central axis 2332L of the driven member 2332 (i.e. central axis CL1 of the crank axle 22) that is opposite to the side having the other clutch lug 233F such that they are arranged in a radial direction of the driven member 2332. The four clutch lugs 233F are spaced apart from each other by an equal distance as measured in the circumferential direction of the driven member 2332.

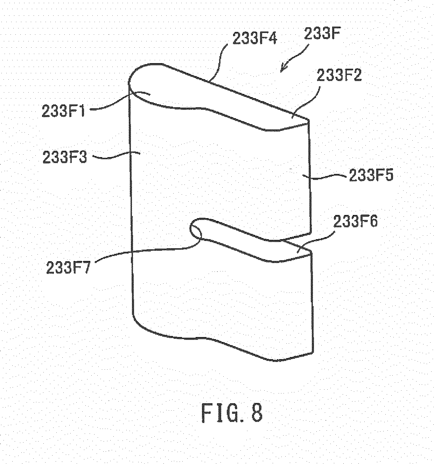

The clutch lugs 233F will be described in detail with reference to FIGS. 6 and 8. FIG. 8 is a perspective view of a clutch lug 233F. The clutch lug 233F includes a base 233F1 and an extending portion 233F2.

As viewed in an axial direction of the driven member 2332, the base 233F1 includes a slide surface 233F3 that curves in an arc. The slide surface 233F3 of the base 233F1 is in contact with the inner surface of the associated recess 2336. The inner surface of the recess 2336 has a shape that corresponds to that of the slide surface 233F3 (i.e. curved in an arc).

The extending portion 233F2 extends straight from the base 233F1. The extending portion 233F2 is shaped as a plate. As viewed in an axial direction of the driven member 2332, the extending portion 233F2 is located toward the second circumferential direction of the driven member 2332 relative to the base 233F1. That is, the extending portion 233F2 is located rearward of the base 233F1 as determined along the direction in which the driving member 2331 rotates forward (i.e. right-handed direction in FIG. 5). In other words, the extending portion 233F2 extends rearward from the base 233F1 in the direction in which the driving member 2331 rotates forward.

The clutch lug 233F includes a contact surface 233F4 and a contact surface 233F5. They will be described below.

As viewed in an axial direction of the driven member 2332, the contact surface 233F4 extends in the direction in which the extending portion 233F2 extends. As viewed in an axial direction of the driven member 2332, the contact surface 233F5 defines an end of the extending portion 233F2 as determined along the direction in which the extending portion extends. The contact surface 233F5 extends in a direction crossing the contact surface 233F4. As viewed in an axial direction of the driven member 2332, the contact surfaces 233F4 and 233F5 are located outward of the slide surface 233F3 as determined along radial directions of the driven member 2332.

The contact surface 233F5 contacts the contact surface 233C1 of a clutch tooth 233C. The state in which the contact surface 233F5 of a clutch lug 233F is in contact with the contact surface 233C1 of a clutch tooth 233C will be hereinafter referred to as engagement between the clutch lug 233F and clutch tooth 233C.

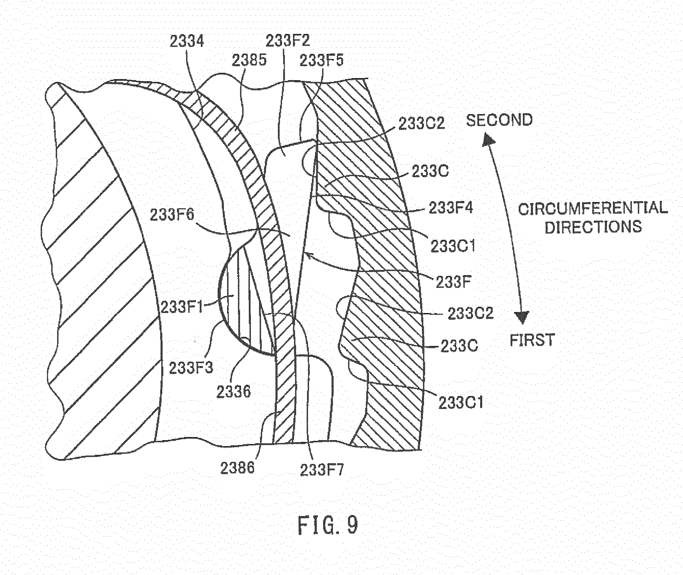

As shown in FIG. 9, the contact surface 233F4 contacts the contact surface 233C2 of a clutch tooth 233C (i.e. back of the clutch tooth 233C). In this state, the clutch lug 233F is not in engagement with the clutch tooth 233C. FIG. 9 is an enlarged view of a portion of FIG. 5.

Returning to FIGS. 6 and 8, the clutch lug 233F has a slit 233F6. The slit 233F6 begins at the end of the extending portion 233F2 and ends in the base 233F1. The inner surfaces of the slit 233F6 includes a contact surface 233F7. The contact surface 233F7 is provided in the base 233F1. As viewed in an axial direction of the driven member 2332, the contact surface 233F7 extends in a direction crossing radial directions of the driven member 2332. As viewed in an axial direction of the driven member 2332, the contact surface 233F7 extends in a direction that is different from those of the contact surfaces 233F4 and 233F5. In the implementation shown in FIG. 6, as viewed in an axial direction of the driven member 2332, the contact surface 233F7 extends in a direction that is generally perpendicular to that of the contact surface 233F5.

As shown in FIG. 5, the one-way clutch 233 further includes two pins 237. The two pins 237 will be described with reference to FIG. 5.

Each of the two pins 237 is a rectangular metal plate that is bent to form a cylinder and, as a whole, is cylindrical in shape. The two pins 237 are spaced apart from each other by an equal distance as measured in the circumferential direction of the driven member 2332. That is, one pin 237 is located on the side of the central axis 2332L of the driven member 2332 that is opposite to the side having the other pin 237 such that these pins are arranged in a radial direction of the driven member 2332.

Each of the two pins 237 is located between a receptacle 2334 and a receptacle 2335 that are adjacent as determined along the circumferential direction of the driven member 2332. That is, each of the two pins 237 is located between the clutch lug 233F in a receptacle 2334 and the clutch lug 233F in a receptacle 2335 as determined along the circumferential direction of the driven member 2332. In the implementation shown in FIG. 5, the clutch lug 233F in a receptacle 2334 is located toward the first circumferential direction of the driven member 2332 relative to the associated pin 237, while the clutch lug 233F in a receptacle 2335 is located toward the second circumferential direction of the driven member 2332 relative to the associated pin 237.

Each of the two pins 237 is press-fitted into a hole 2337 formed in the outer peripheral portion 233D of the driven member 2332. That is, the two pins 237 are located in the outer peripheral portion 233D. As shown in FIG. 4, each hole 2337 extends in the axial direction of the driven member 2332 and through the driven member 2332. Each of the two pins 237, press-fitted into its respective hole 2337, is pushed against the inner periphery of the hole 2337 by the spring-back of the pin 237.

As shown in FIG. 5, the one-way clutch 233 further includes two springs 238. The two springs 238 will be described with reference to FIG. 5.

The two springs 238 is located within a slit 233G formed in the outer peripheral portion 233D of the driven member 2332. That is, the two springs 238 are located in the outer peripheral portion 233D. The slit 233G extends over the entire circumference of the driven member 2332. The slit 233G is open on the outer peripheral surface 233D1 of the driven member 2332. The depth (i.e. radial dimension) of the slit 233G is generally the same across the entire circumference. The depth (i.e. radial dimension) of the slit 233G is larger than the depth (i.e. radial dimension) of the receptacles 2334 and 2335. That is, the portions of the slit 233G that correspond to the receptacles 2334 and 2335 are open on the inner surfaces of the receptacles 2334 and 2335. The two springs 238 are located inward of the outer peripheral surface 233D1 of the driven member 2332 as determined along radial directions of the driven member 2332.

One of the two springs 238 is in contact with one of the two pins 237. The other one of the two springs 238 is in contact with the other one of the two pins 237. The middle portion of each of the two springs 238 is in contact with the inner portion of the associated pin 237 as determined along radial directions of the driven member 2332. Each of the two springs 238 is in contact with the clutch lug 233F located toward the first circumferential direction of the driven member 2332 relative to the pin 237 with which the middle portion of the spring 238 is in contact, and with the clutch lug 233F located toward the second circumferential direction of the driven member 2332 relative to the pin 237 with which the middle portion of the spring 238 is in contact. Each spring 238 constantly exerts a biasing force on the associated clutch lugs 233F. The biasing force of the spring 238 acts in a direction to push the base 233F1 of the clutch lugs 233F onto the driven member 2332.

When the two springs 238 are located in the slit 233G, each spring is shaped like a bird spreading its wings as viewed in an axial direction of the driven member 2332. When the two springs 238 are in a free state, each spring is shaped like a bird closing its wings compared with the state shown in FIG. 5. In FIG. 5, each of the two springs 238 has its wings spread compared with the free state as the biasing force of the spring 236 is overcome.

The two springs 238 are located on a plane that is perpendicular to the axial direction of the driven member 2332. The two springs 238 extend in directions crossing radial directions of the driven member 2332. Each of the two springs 238 is symmetrical with respect to a straight line L1 as viewed in an axial direction of the driven member 2332. The straight line L1 connects the centers 23371 of the two holes 2337. Each point P1 at which one of the two springs 238 contacts the associated pin 237 is on the straight line L1.

Each of the two springs 238 includes a straight portion 2381, a curved portion 2382, a curved portion 2383, a curved portion 2384, a curved portion 2385, a curved portion 2386, and a straight portion 2387. These portions will be described below with reference to FIG. 5.

The straight portion 2381 extends straight in a direction that is generally perpendicular to radial directions of the driven member 2332. The curved portion 2382 is connected to a first end of the straight portion 2381. The first and second ends of the straight portion 2381 are located toward the second circumferential direction of the driven member 2332 relative to the clutch lug 233F in the receptacle 2335.

The curved portion 2382 extends from the first end of the straight portion 2381 in directions crossing radial directions of the driven member 2332. The curved portion 2382 is curved generally along the outer peripheral surface of the driven member 2332. The first end of the curved portion 2382 is located toward the first circumferential direction of the driven member 2332 relative to the clutch lug 233F in the receptacle 2335.

As shown in FIG. 6, the curved portion 2382 passes through the slit 233F6 in the clutch lug 233F in the receptacle 2335. The curved portion 2382 is in contact with an end of the contact surface 233F7 (i.e. end located toward the first circumferential direction of the driven member 2332). As the spring 238 exerts a biasing force on the clutch lug 233F, the slide surface 233F3 of the clutch lug 233F slides along the inner surface of the recess 2336 such that the clutch lug 233F turns upright. The end of the extending portion 233F2 of the clutch lug 233F is located outside the receptacle 2335. That is, the end of the extending portion 233F2 is located outward of the outer peripheral surface 233D1 of the driven member 2332 as determined along radial directions of the driven member 2332.

Returning to FIG. 5, the curved portion 2383 extends from the first end of the curved portion 2382 in directions crossing radial directions of the driven member 2332. The curved portion 2383 is curved with a radius of curvature that is smaller than that of the curved portion 2382. The first end of the curved portion 2383 is located inward of the second end of the curved portion 2383 (i.e. first end of the curved portion 2382) as determined along radial directions of the driven member 2332.

The curved portion 2384 extends from the first end of the curved portion 2383 in directions crossing radial directions of the driven member 2332. The curved portion 2384 is curved in the direction opposite to that of the curved portion 2382, with a radius of curvature that is generally equal to that of the curved portion 2383. The first end of the curved portion 2384 is generally at the same position as the second end of the curved portion 2384 as determined along radial directions of the driven member 2332.

The curved portion 2384 has the point P1 that is in contact with the pin 237. The point P1 is located in the middle of the curved portion 2384 (i.e. middle as determined along the direction in which the curved portion 2384 generally extends).

The curved portion 2385 extends from the first end of the curved portion 2384 in directions crossing radial directions of the driven member 2332. The curved portion 2385 is curved with a radius of curvature that is generally equal to that of the curved portion 2383. The first end of the curved portion 2385 is located outward of the second end of the curved portion 2385 (i.e. first end of the curved portion 2384) as determined along radial directions of the driven member 2332. The first end of the curved portion 2385 is generally at the same position as the second end of the curved portion 2383 as determined along radial directions of the driven member 2332. The first end of the curved portion 2385 is located in the receptacle 2334. The first end of the curved portion 2385 is located toward the second circumferential direction of the driven member 2332 relative to the clutch lug 237 in the receptacle 2334.

The curved portion 2386 extends from the first end of the curved portion 2385 in the circumferential direction of the driven member 2332. The curved portion 2386 is curved with a radius of curvature that is generally equal to that of the curved portion 2382. The first end of the curved portion 2386 is located toward the first circumferential direction of the driven member 2332 relative to the clutch lug 233F in the receptacle 2334. The first end of the curved portion 2386 is generally at the same position as the second end of the curved portion 2382 (i.e. first end of the straight portion 2381) as measured in radial directions of the driven member 2332.

As shown in FIG. 9, the curved portion 2386 passes through the slit 233F6 in the clutch lug 233F in the receptacle 2334. The curved portion 2386 is in contact with an end of the contact surface 233F7 (i.e. end located toward the first circumferential direction of the driven member 2332). As the spring 238 exerts a biasing force on the clutch lug 233F, the slide surface 233F3 of the clutch lug 233F slides along the inner surface of the recess 2336 such that the clutch lug 233F turns upright. The end of the extending portion 233F2 of the clutch lug 233F is located outside the receptacle 2335. That is, the end of the extending portion 233F2 is located outward of the outer peripheral surface 233D1 of the driven member 2332 as determined along radial directions of the driven member 2332.

Returning to FIG. 5, the straight portion 2387 extends straight from the first end of the curved portion 2386 in a direction that is generally perpendicular to radial directions of the driven member 2332. The first end of the straight portion 2387 is generally at the position as the second end of the straight portion 2381 as determined along radial directions of the driven member 2332. The first end of the straight portion 2387 of one spring 238 is in the receptacle 2335 in which the second end of the straight portion 2381 of the other spring 238 is located.

Next, the operation of the one-way clutch 233 will be described.

In the one-way clutch 233, as shown in FIG. 5, when the clutch lugs 233F in the two receptacles 2335 arranged in a radial direction are in engagement with clutch teeth 233C, the clutch lugs 233F in the two receptacles 2334 arranged in another radial direction are not in engagement with clutch teeth 233C. Although not shown, when the clutch lugs 233F in the two receptacles 2334 are in engagement with clutch teeth 233C, the clutch lugs 233F in the two receptacles 2335 are not in engagement with clutch teeth 233C. That is, the number of those of the four clutch lugs 233F that are in engagement with clutch teeth 233C is 2. One of these two clutch lugs 233F (i.e. clutch lugs 233F engaging clutch teeth 233C) is located on the side of the central axis 2332L of the driven member 2332 that is opposite to the side having the other clutch lug 233F such that the clutch lugs are arranged in a radial direction of the driven member 2332.

The four clutch lugs 233F are constantly urged by the biasing forces of the springs 238 to turn upright. Thus, the clutch lugs 233F engaging clutch teeth 233C are pushed by the biasing forces of the springs 238 against the inner peripheral surface 233B1 of the driving member 2331. The clutch lugs 233F that are not in engagement with clutch teeth 233C are pushed by the biasing forces of the springs 238 against the contact surfaces 233C2 of clutch teeth 233C.

As two clutch lugs 233F are in engagement with clutch teeth 233C, rotation of the driving member 2331 is transmitted to the driven member 2332. Two clutch lugs 233F engage clutch teeth 233C when the driving member 2331 is rotating forward (i.e. in the right-handed direction in FIG. 5). That is, when the driving member 2331 is rotating forward, the driven member 2332 also rotates forward. In short, when the crank axle 22 is rotating forward, the driven member 2332 also rotates forward.

On the other hand, when the driving member 2331 is rotating rearward (i.e. in the left-handed direction in FIG. 5), the four clutch lugs 233F are pushed in by the contact surfaces 233C2 of clutch teeth 233C, and, when the contact surfaces 233C2 are not in contact any more, the clutch lugs are urged by the biasing forces of the springs 238 to turn upright. As this operation is repeated, the four clutch lugs 233F do not engage clutch teeth 233C when the driving member 2331 is rotating rearward. That is, rotation of the driving member 2331 is not transmitted to the driven member 2332.

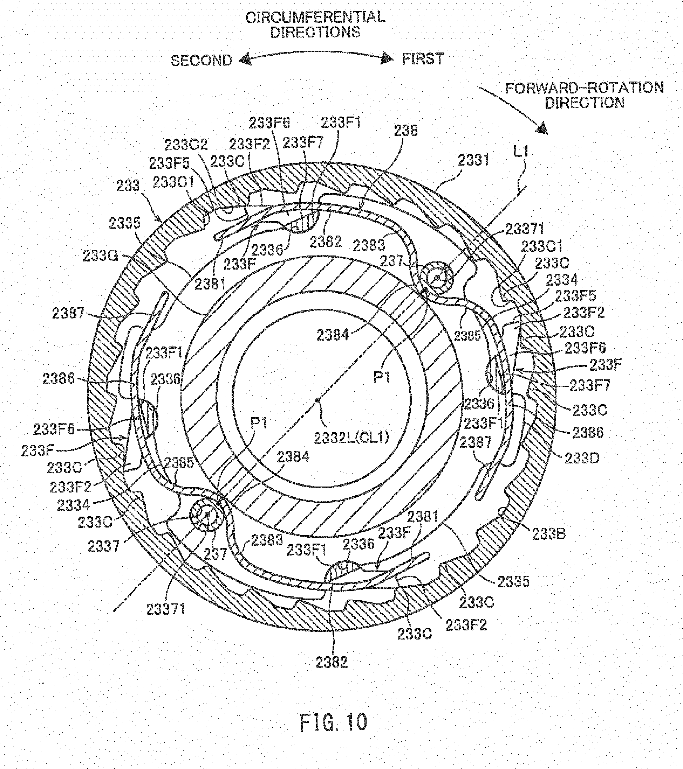

FIG. 10 shows the clutch at a moment when the driving member 2331 is rotated rearward as discussed above, where the four clutch lugs 233F are not in engagement with clutch teeth 233C. More specifically, FIG. 10 shows an example of a state in which the four clutch lugs 233F are pushed in by the contact surfaces 233C2 of clutch teeth 233C. How the driving member 2331 is rotated forward, starting with the state shown in FIG. 10, will be described below.

The distance between the contact surface 233F5 of the clutch lug 233F located in a receptacle 2335 and the contact surface 233C1 of the clutch tooth 233C located directly forward as determined along the forward-rotation direction of the driving member 2331 is larger than the distance between the contact surface 233F5 of the clutch lug 233F located in a receptacle 2334 and the contact surface 233C1 of the clutch tooth 233C located directly forward as determined along the forward-rotation direction of the driving member 2331. Thus, when the driving member 2331 rotates forward starting with the state shown in FIG. 10, it is not the clutch lug 233F located in a receptacle 2335 that comes into engagement with a clutch tooth 233C, but the clutch lug 233F located in a receptacle 2334.

The extending portion 233F2 of the clutch lug 233F located in each receptacle 2335 is in contact with the contact surface 233C2 of a clutch tooth 233C. The extending portion 233F2 of the clutch lug 233F located in each receptacle 2334 is similarly in contact with the contact surface 233C2 of a clutch tooth 233C.

When a clutch lug 233F is in contact with the contact surface 233C2 of a clutch tooth 233C, the clutch lug 233F is pushed by the clutch tooth 233C inwardly as determined along radial directions of the driven member 2332. At this moment, the clutch lug 233F moves against the biasing force of the associated spring 238. More specifically, the slide surface 233F3 of the clutch lug 233F slides along the inner surface of the associated recess 2336. At this moment, the end of the contact surface 233F7 in the slit 233F6 of the clutch lug 233F that is in contact with the spring 238 moves outwardly as determined along radial directions of the driven member 2332. As a result, the spring 238 is pushed by the clutch lug 233F outwardly as determined along radial directions of the driven member 2332.

When the curved portion 2386 of the spring 238 is pushed by the clutch lug 233F located in a receptacle 2334 outwardly as determined along radial directions of the driven member 2332, the movement of the spring 238 is restricted by the pin 237 that is in contact with the spring 238. Thus, the spring 238 swings counter-clockwise with respect to the pin 237. At this moment, the curved portion 2382 of the spring 238 pushes the contact surface 233F7 of the clutch lug 233F located in the associated receptacle 2335, inwardly as determined along radial directions of the driven member 2332. That is, the biasing force exerted by the spring 238 on the clutch lug 233F located in the receptacle 2335 increases. As a result, the clutch lug 233F located in the receptacle 2335 is kept upright.

On the other hand, when the clutch lug 233F located in a receptacle 2335 pushes the curved portion 2382 of the spring 238 outwardly as determined along radial directions of the driven member 2332, the movement of the spring 238 is restricted by the pin 237 that is in contact with the spring 238. Thus, the spring 238 swings clockwise with respect to the pin 237. At this moment, the curved portion 2386 of the spring 238 pushes the contact surface 233F7 of the clutch lug 233F located in the associated receptacle 2334, inwardly as determined along radial directions of the driven member 2332. That is, the biasing force exerted by the spring 238 on the clutch lug 233F located in the receptacle 2334 increases. As a result, the clutch lug 233F located in the receptacle 2334 is kept upright.

It is now assumed that the clutch lugs 233F located in the receptacles 2334 and the clutch lugs 233F located in the receptacles 2335 are pushed by clutch teeth 233C inwardly as determined along radial directions of the driven member 2332. At this moment, the movement of each spring 238 is affected by the movement of the one of the associated clutch lugs 233F that is pushed in by a larger amount. In FIG. 10, the clutch lugs 233F located in the receptacles 2335 are pushed in by the clutch teeth 233C by a larger amount than the clutch lugs 233F located in the receptacles 2334. Thus, in FIG. 10, the movement of each spring 238 is affected by the movement of the clutch lug 233F located in the associated one of the receptacles 2335.

That is, in FIG. 10, the curved portion 2382 of each spring 238 is pushed by the clutch lug 233F located in the associated one of the receptacles 2335, outwardly as determined along radial directions of the driven member 2332. The movement of the spring 238 is restricted by the pin 237 that is in contact with the spring 238. The spring 238 swings clockwise with respect to the pin 237. At this moment, the curved portion 2386 of the spring 238 pushes the contact surface 233F7 of the clutch lug 233F located in the associated one of the receptacles 2334 inwardly as determined along radial directions of the driven member 2332. As a result, the clutch lug 233F located in the receptacle 2334 is kept upright. That is, the clutch lug 233F located in the receptacle 2334 is kept in contact with a clutch tooth 233C by the biasing force of the spring 238. As a result, when the driving member 2331 is rotating forward starting with the state shown in FIG. 10, the clutch lug 233F located in the receptacle 234 comes into stable engagement with a clutch tooth 233C.

At some rotational positions of the driving member 2331 relative to the driven member 2332, the clutch lugs 233F located in the receptacles 2334 may be pushed inwardly as determined along radial directions of the driven member 2332 by a larger amount than the clutch lugs 233F located in the receptacles 2335. In these cases, when the driving member 2331 is rotating forward, the clutch lugs 233F located in the receptacles 2335 are to come into engagement with clutch teeth 233C. The clutch lugs 233F are kept in contact with clutch teeth 233C by the biasing forces of the springs 238. When the driving member 2331 rotates forward from that state, the clutch lugs 233F located in the receptacles 2335 come into stable engagement with the clutch teeth 233C.

The electric-motor-assisted bicycle 10 includes the one-way clutch 233. In the one-way clutch 233, the number of clutch lugs 233F is 4. That is, the number of clutch lugs 233F is an even number not smaller than 4 (four). The number of clutch teeth 233C is 26. That is, the number of clutch teeth 233C is an even number that is not a multiple of the number of clutch lugs 233F. Thus, each of the two of the clutch lugs 233F that face each other so as to be arranged in a radial direction is in engagement with one of the clutch teeth 233C, while each of the other clutch lugs 233F is not in engagement with any of the clutch teeth 233C. This will stabilize the operation of the one-way clutch 233 while reducing the load on the clutch lugs 233F.

In the one-way clutch 233, as the driving member 2331 rotates rearward (i.e. in the opposite direction to the forward direction), each of the clutch lugs 233F is not in contact with any of the clutch teeth 233C. When the driving member 2331 rotates forward from that state, the clutch lug 233F that engages a clutch tooth 233C is the one that has to move the smallest distance.

In the one-way clutch 233, the distance required for each of the two clutch lugs 233F facing each other and arranged in a radial direction to come into engagement with a clutch tooth 233C is smaller than the distance required for each of the other clutch lugs 233F to come into engagement with a clutch tooth 233C. That is, two clutch lugs 233F exist that need to move a smaller distance (i.e. for a shorter time) to engage a clutch tooth 233C. This will reduce time lag.

In the one-way clutch 233, the pins 237 which are in contact with the springs 238 are located outward of the springs 238 as determined along radial directions of the driven member 2332. Thus, when some clutch lugs 233F are pushed inwardly as determined along radial directions of the driven member 2332 by a larger amount than the other clutch lugs 233F, each spring 238 swings with respect to the associated pin 237. As a result, the springs 238 push the contact surfaces 233F7 of the other clutch lugs 233F inwardly as determined along radial directions of the driven member 2332, thereby keeping the other clutch lugs 233F upright. This will stabilize the operation of the one-way clutch 233.

The above embodiment describes a drive unit 20 in which the gear 2333 is provided on the driven member 2332 of the one-way clutch 233 and a resultant of a human-generated force (i.e. pedaling force) and a motor-generated drive force is output; alternatively, the present teaching may be applied to a drive unit in which, instead of using the gear 2333 provided on the driven member 2332, an auxiliary sprocket provided on the rotational shaft of the reduction gear 24 may be used to provide a motor drive force to a midway portion of the chain 36 wound around the driving and driven sprockets 34 and 32.

For example, the middle portion of each spring 238 may be wound around its pin 237. In such implementations, too, the pin 237 may restrict the movement of the spring 238. Thus, when the springs 238 are pushed by some clutch lugs 233F outwardly as determined along radial directions of the driven member 2332, the springs 238 push the contact surfaces 233F7 of the other clutch lugs 233F inwardly as determined along radial directions of the driven member 2332.

In the above-illustrated embodiment, the number of clutch lugs 233F is 4; alternatively, the number of clutch lugs 233F may be, for example, an even number not smaller than 4 (for example, 6).

In the above-illustrated embodiment, the outer member (i.e. driving member 2331) rotates together with the crank axle 22; alternatively, the inner member (i.e. driven member 2332) may rotate together with the crank axle 22.

In the above-illustrated embodiment, a plurality of clutch teeth 233C are provided on the inner peripheral surface 233B1 of the inner peripheral portion 233B of the outer member (i.e. driving member 2331) while a plurality of clutch lugs 233F are provided on the outer peripheral portion 233D of the inner member (i.e. driven member 2332); alternatively, a plurality of clutch lugs may be provided on the inner peripheral portion of the outer member while a plurality of clutch teeth may be provided on the outer peripheral portion of the inner member.

## Claims

1. A drive unit configured to be attached to a vehicle-body frame included in an electric-motor-assisted bicycle, comprising:
a housing (21);
a crank axle (22) extending through the housing (21); and
a one-way clutch (233) positioned to be coaxial with the crank axle (22),
the one-way clutch (233) including:
an outer member (2331) including an inner peripheral portion (233B);
an inner member (2332) including an outer peripheral portion (233D), the outer peripheral portion (233D) facing the inner peripheral portion (233B) of the outer member (2331) such that the outer peripheral portion (233D) and the inner peripheral portion (233B) are arranged in a radial direction of the crank axle (22), wherein the inner member (2332) is inserted through the outer member (2331),
wherein one of the outer member (2331) and the inner member (2332) is capable of rotating together with the crank axle (22), and
a plurality of clutch teeth (233C) provided on one of the inner peripheral portion (233B) of the outer member (2331) and the outer peripheral portion (233D) of the inner member (2332), the clutch teeth (233C) being spaced apart from each other by an equal distance as measured in a circumferential direction of the crank axle (22);
a plurality of clutch lugs (233F) provided on the other of the inner peripheral portion (233B) of the outer member (2331) and the outer peripheral portion (233D) of the inner member (2332), the clutch lugs (233F) spaced apart from each other by an equal distance as measured in the circumferential direction;
wherein the number of the clutch lugs (233F) is an even number not smaller than four, **characterized in that**
a plurality of springs (238) is provided on the other of the inner peripheral portion (233B) of the outer member (2331) and the outer peripheral portion (233D) of the inner member (2332) and spaced apart from each other by an equal distance as measured in the circumferential direction,
the number of the clutch teeth (233C) is an even number that is not a multiple of the number of the clutch lugs (233F),
the number of the springs (238) is half the number of the clutch lugs (233F), and
each of the plurality of springs (238) is capable of exerting a biasing force on two of the plurality of clutch lugs (233F) that are adjacent as determined along the circumferential direction for holding them at a position for engagement with two of the plurality of clutch teeth (233C),
the one-way clutch (233) further including a plurality of pins (237), wherein the plurality of pins (237) are provided on the other of the inner peripheral portion (233B) of the outer member (2331) and the outer peripheral portion (233D) of the inner member (2332), each of the plurality of pins (237) is in contact with one of the plurality of springs (238) to restrict movement of this spring, and, when one of the two clutch lugs (233F) on which the spring restricted from moving exerts the biasing force is pushed in from the position for engagement by a back of one of the plurality of clutch teeth (233C), the biasing force exerted on the other one of the two clutch lugs (233F) increases.

2. A drive unit according to claim 1, wherein the outer member (2331) rotates together with the crank axle (22).

3. A drive unit according to claim 1 or 2, wherein the plurality of clutch teeth (233C) are provided on the inner peripheral portion (233B) of the outer member (2331), and
the plurality of clutch lugs (233F) are provided on the outer peripheral portion (233D) of the inner member (2332).

4. A drive unit according to claim 3, wherein the plurality of pins (237) are provided on the inner member (2332).

5. A drive unit according to any one of claims 1 to 4, wherein each of the plurality of pins (237) is located between the two clutch lugs (233F) as determined along the circumferential direction.

6. A drive unit according to any one of claims 1 to 5, wherein each of the plurality of springs (238) is located on a plane perpendicular to an axial direction of the crank axle (22) and is shaped as a wing extending in a direction crossing the radial direction as viewed in the axial direction of the crank axle (22), and is positioned to be swingable with respect to the one of the plurality of pins (237) with which the spring is in contact.

7. A drive unit according to claim 6, wherein the number of the clutch lugs (233F) is four.

8. An electric-motor-assisted bicycle comprising the drive unit according to any one of claims 1 to 7.

## Patentansprüche

1. Eine Antriebs-Einheit, konfiguriert um an einem Fahrzeug-Körper-Rahmen angebracht zu werden, der in einem Elektro-Motor-Unterstützten-Fahrrad beinhaltet ist, umfasst:
ein Gehäuse (21);
eine Kurbel-Achse (22), die sich durch das Gehäuse (21) erstreckt; und
eine Ein-Weg-Kupplung (233), die positioniert ist um koaxial mit der Kurbel-Achse (22) zu sein,
die Ein-Weg-Kupplung (233) beinhaltet:
ein Außen-Element (2331), das einen Innen-Umfang-Abschnitt (233B) beinhaltet;
ein Innen-Element (2332), das einen Außen-Umfang-Abschnitt (233D) beinhaltet, der Außen-Umfang-Abschnitt (233D) ist dem Innen-Umfang-Abschnitt (233B) von dem Außen-Element (2331) zugewandt, so dass der Außen-Umfang-Abschnitt (233D) und der Innen-Umfang-Abschnitt (233B) in einer Radial-Richtung von der Kurbel-Achse (22) angeordnet sind, wobei das Innen-Element (2332) durch das Außen-Element (2331) eingesetzt ist,
wobei eines von dem Außen-Element (2331) und dem Innen-Element (2332) in der Lage ist zusammen mit der Kurbel-Achse (22) zu drehen, und
eine Mehrzahl von Kupplungs-Zähnen (233C), die an einem von dem Innen-Umfang-Abschnitt (233B) von dem Außen-Element (2331) und dem Außen-Umfang-Abschnitt (233D) von dem Innen-Element (2332) vorgesehen sind, die Kupplungs-Zähne (233C) sind voneinander durch einen gleichen Abstand beabstandet, gemessen in einer Umfangs-Richtung der Kurbel-Achse (22);
eine Mehrzahl von Kupplungs-Mitnehmern (233F), die an dem anderen von dem Innen-Umfang-Abschnitt (233B) von dem Außen-Element (2331) und dem Außen-Umfang-Abschnitt (233D) von dem Innen-Element (2332) vorgesehen sind, die Kupplungs-Mitnehmer (233F) sind voneinander durch einen gleichen Abschnitt beabstandet, gemessen in der Umfangs-Richtung;
wobei die Anzahl von Kupplungs-Mitnehmern (233F) eine gerade Anzahl, nicht kleiner als vier, ist, **dadurch gekennzeichnet, dass**
eine Mehrzahl von Federn (238) an dem anderen von dem Innen-Umfang-Abschnitt (233B) von dem Außen-Element (2331) und dem Außen-Umfang-Abschnitt (233D) von dem Innen-Element (2332) vorgesehen, und voneinander durch einen gleichen Abstand beabstandet sind, gemessen in der Umfangs-Richtung,
die Anzahl der Kupplungs-Zähne (233C) ist eine gerade Anzahl, die nicht ein Mehrfaches der Anzahl der Kupplungs-Mitnehmer (233F) ist,
die Anzahl der Federn (238) ist die Hälfte der Anzahl der Kupplungs-Mitnehmer (233F), und jede der Mehrzahl der Federn (238) ist in der Lage eine Drück-Kraft auf zwei von der Mehrzahl von Kupplungs-Mitnehmern (233F) auszuüben, die benachbart sind, wenn bestimmt entlang der Umfangs-Richtung, um diese an einer Position zum Eingriff mit zwei von der Mehrzahl der Zähne (233C) zu halten,
die Ein-Weg-Kupplung (233) beinhaltet weiterhin eine Mehrzahl von Stiften (237), wobei die Mehrzahl von Stiften (237) an dem anderen von dem Innen-Umfang-Abschnitt (233B) von dem Außen-Element (2331) und dem Außen-Umfang-Abschnitt (233B) von dem Innen-Element (2332) vorgesehen sind, jeder der Mehrzahl von Stiften (237) ist in Kontakt mit einer von der Mehrzahl der Federn (238), um die Bewegung von dieser Feder zu beschränken, und wenn einer von den zwei Kupplungs-Mitnehmern (233F), an dem die Feder zur Bewegung beschränkt ist, die Drück-Kraft ausübt, gedrückt von der Position des Eingriffs durch einen Rücken von einem der Mehrzahl von Kupplungs-Zähnen (233C), steigt die Drück-Kraft, ausgeübt auf den anderen von den zwei Kupplungs-Mitnehmern (233F), an.

2. Eine Antriebs-Einheit gemäß Anspruch 1, wobei das Außen-Element (2331) zusammen mit der Kurbel-Achse (22) dreht.

3. Eine Antriebs-Einheit gemäß Anspruch 1 oder 2, wobei die Mehrzahl von Kupplungs-Zähnen (233C) an dem Innen-Umfang-Abschnitt (233B) von dem Außen-Element (2331) vorgesehen sind, und die Mehrzahl von Kupplungs-Mitnehmern (233F) an dem Außen-Umfang-Abschnitt (233D) des Innen-Elements (2332) vorgesehen sind.

4. Eine Antriebs-Einheit gemäß Anspruch 3, wobei die Mehrzahl von Stiften (237) an dem Innen-Element (2332) vorgesehen sind.

5. Eine Antriebs-Einheit gemäß zu irgendeinen der Ansprüche 1 bis 4, wobei jeder der Mehrzahl von Stiften (237) zwischen zwei Kupplungs-Mitnehmern (233F) angeordnet ist, wenn entlang der Umfangs-Richtung bestimmt.

6. Eine Antriebs-Einheit gemäß zu irgendeinen der Ansprüche 1 bis 5, wobei jede der Mehrzahl von Federn (238) in einer Ebene, senkrecht zu einer Axial-Richtung der Kurbel-Achsel (22) angeordnet ist, und als ein Flügel geformt ist, der sich in eine Richtung, quer zu der Radial-Richtung, erstreckt, wenn in der Axial-Richtung von der Kurbel-Achse (22) betrachtet, und positioniert ist, um schwenkbar mit Bezug zu dem einen von der Mehrzahl der Stiften (237), mit dem die Feder in Kontakt ist, zu sein.

7. Eine Antriebs-Einheit gemäß Anspruch 6, wobei die Anzahl der Kupplungs-Mitnehmer (233F) vier ist.

8. Ein Elektro-Motor-Unterstütztes-Fahrrad, das je Antriebs-Einheit gemäß zu irgendeinem der Ansprüche 1 bis 7 umfasst.

## Revendications

1. Unité d'entraînement configurée pour être attachée à un châssis de corps de véhicule inclus dans une bicyclette assistée par un moteur électrique, comprenant :
un boîtier (21) ;
un axe de pédalier (22) qui s'étend à travers le boîtier (21) ; et
un embrayage unidirectionnel (233) positionné pour être coaxial avec l'axe de pédalier (22),
l'embrayage unidirectionnel (233) comprenant :
un élément externe (2331) comprenant une portion périphérique interne (233B) ;
un élément interne (2332) comprenant une portion périphérique externe (233D), la portion périphérique externe (233D) faisant face à la portion périphérique interne (233B) de l'élément externe (2331) de telle sorte que la portion périphérique externe (233D) et la portion périphérique interne (233B) sont agencées en direction radiale de l'axe de pédalier (22), dans laquelle l'élément interne (2332) est inséré à travers l'élément externe (2331),
dans laquelle un élément parmi l'élément externe (2331) et l'élément interne (2332) est capable de tourner conjointement à l'axe de pédalier (22), et
une pluralité de dents d'embrayage (233C) pourvue sur une portion parmi la portion périphérique interne (233B) de l'élément externe (2331) et la portion périphérique externe (233D) de l'élément interne (2332), les dents d'embrayage (233C) étant espacées entre elles d'une distance égale, telle que mesurée en direction circonférentielle de l'axe de pédalier (22) ;
une pluralité d'ergots d'embrayage (233C) pourvus sur l'autre portion parmi la portion périphérique interne (233B) de l'élément externe (2331) et la portion périphérique externe (233D) de l'élément interne (2332), les ergots d'embrayage (233F) étant espacées entre eux d'une distance égale, telle que mesurée en direction circonférentielle ;
dans laquelle le nombre d'ergots d'embrayage (233F) est un nombre pair supérieur ou égal à quatre,
**caractérisée en ce que**
une pluralité de ressorts (238) est pourvue sur l'autre portion parmi la portion périphérique interne (233B) de l'élément externe (2331) et la portion périphérique externe (233D) de l'élément interne (2332), et ces ressorts sont espacés entre eux d'une distance égale, telle que mesurée en direction circonférentielle,
le nombre de dents d'embrayage (233C) est un nombre pair qui n'est pas un multiple du nombre d'ergots d'embrayage (233F),
le nombre de ressorts (238) est égal à la moitié du nombre d'ergots d'embrayage (233F), et
chaque ressort de la pluralité de ressorts (238) est capable d'exercer une force de poussée sur deux ergots de la pluralité d'ergots d'embrayage (233F) qui sont adjacents, tel que déterminé selon la direction circonférentielle, pour les maintenir dans une position d'engagement avec deux dents de la pluralité de dents d'embrayage (233C),
l'embrayage unidirectionnel (233) comprenant en outre une pluralité de broches (237), dans laquelle les broches de la pluralité de broches (237) sont pourvues sur l'autre portion parmi la portion périphérique interne (233B) de l'élément externe (2331) et la portion périphérique externe (233D) de l'élément interne (2332), chaque broche de la pluralité de broches (237) est en contact avec un ressort de la pluralité de ressorts (238) pour restreindre le déplacement de ce ressort, et, quand un des deux ergots d'embrayage (233F) sur lesquels le ressort dont le déplacement est restreint exerce la force de poussée est enfoncé depuis la position d'engagement par le dos d'une dent de la pluralité de dents d'embrayage (233C), la force de poussée exercée sur l'autre ergot parmi les deux ergots d'embrayage (233F) augmente.

2. Unité d'entraînement selon la revendication 1, dans laquelle l'élément externe (2331) tourne conjointement à l'axe de pédalier (22).

3. Unité d'entraînement selon la revendication 1 ou 2, dans laquelle les dents de la pluralité de dents d'embrayage (233C) sont pourvues sur la portion périphérique interne (233B) de l'élément externe (2331), et
les ergots de la pluralité d'ergots d'embrayage (233F) sont pourvus sur la portion périphérique externe (233D) de l'élément interne (2332).

4. Unité d'entraînement selon la revendication 3, dans laquelle les broches de la pluralité de broches (237) sont pourvues sur l'élément interne (2332).

5. Unité d'entraînement selon l'une quelconque des revendications 1 à 4, dans laquelle chaque broche de la pluralité de broches (237) se trouve entre les deux ergots d'embrayage (233F) tel que déterminé en direction circonférentielle.

6. Unité d'entraînement selon l'une quelconque des revendications 1 à 5, dans laquelle chaque ressort de la pluralité de ressorts (238) se trouve dans un plan perpendiculaire à une direction axiale de l'axe de pédalier (22) et est conformé comme une aile qui s'étend selon une direction qui croise la direction radiale vu en direction axiale de l'axe de pédalier (22), et est positionné de manière à pouvoir osciller par rapport à ladite broche de la pluralité de broches (237) avec laquelle le ressort est en contact.

7. Unité d'entraînement selon la revendication 6, dans laquelle le nombre d'ergots d'embrayage (233F) est de quatre.

8. Bicyclette assistée par un moteur électrique comprenant l'unité d'entraînement selon l'une quelconque des revendications 1 à 7.
